# EUROPEAN PATENT APPLICATION

(11) **EP 1 550 963 A1**
(43) Date of publication of application: **06.07.2005**
(21) Application number: 02733335.0
(22) Date of filing: 06.06.2002
(51) Int. Cl.: G06F 17/60

(54) **DATA COMMUNICATION MEDIATION APPARATUS COOPERATING WITH PURCHASER MOBILE TERMINAL**

(71) Applicant: FUJITSU LIMITED, Kawasaki-shi, Kanagawa 211-8588 (JP)
(72) Inventor: MIURA, Masayuki, Fujitsu PC Systems Limited, Inagi-shi, Tokyo 206-0801 (JP)
(74) Representative: Stebbing, Timothy Charles
(86) International application number: PCT/JP2002/005582
(87) International publication number: WO 2003/105037

(57) **Abstract**

In a personalauthentication and a settlement authentication required for the Internet shopping, in order to make above authentication processing executed between a server and a client computer be executed between the server and a purchaser portable terminal equipped with personal identification information and a communication function, a program of the present invention has functions for transferring to the purchaser portable terminal a personal identification information request sent from the server and data associated with the authentication processing and for transferring to the server the data associated with the authentication processing sent from the purchaser portable terminal. Due to the program, while products are selected with a client computer such as a personal computer with a large screen and good operability, personal identification information required for the personal authentication and a settlement authentication is transmitted from the purchaser portable terminal and will not be stored in a hard disk of the client computer. Also, by encrypting communication, leakage of the personal identification information to a third party can be prevented and, as a result, the "spoofing" can be prevented.

## Description

### TECHNICAL FIELD

The present invention relates generally to authentication processing and, more particularly, to a client computer provided with a data communication intermediation program mediating data communication for personal authentication and settlement authentication in Internet shopping and with a communication intermediation apparatus mediating the above data communication.

### BACKGROUND ART

Currently, a series of actions is widely conducted as Internet shopping for purchasing items such as products or services from web sites of individuals, corporations or the like created on the Internet and executing payment-settlement procedures. In this specification, a service is considered as one of products which can be selected by purchasers, and items such as products or services are described as products for the sake of simplicity.

First, a purchaser browses products published on shop's web pages and selects a product to be purchased utilizing a web browser from a client computer such as a personal computer (hereinafter referred to as PC) connected to the Internet. When the product to be purchased is determined, the purchaser indicates purchase intention and enters into purchase procedures. In the purchase procedures, a personal authentication is executed for clarifying an identity of the purchaser and checking whether the purchaser really has the intention to conduct a transaction, and a settlement authentication is executed for checking whether a payment is performed by the purchaser or whether the purchaser has ability topay. The personal authentication is executed based on personal information which is information for identifying the purchasing individual and the settlement authentication is executed based on settlement information, such as a credit card number, a bank account number or the like. In this specification, the personal information and the settlement information are collectively referred to as personal identification information, hereinafter. The shop ships the product if results of above personal authentication and settlement authentication are preferable, and the purchase procedures are terminated.

In this way, the personal identification information plays an important role in the Internet shopping.

However, in the case of the Internet shopping conducted by the client computer such as PC, the purchaser inputs the personal identification information on the client computer when the personal authentication and the settlement authentication are needed. Since, in the client computer such as PC, the input personal identification information is generally stored in a hard disk, an ill-intentioned third party directly reads the information in the hard disk, reads out the information by intruding into a terminal apparatus via network and peeping remaining histories when the authenticated person is away from the terminal apparatus, resulting in the personal identification information such as accounts, passwords, credit card numbers, addresses and telephone numbers to be easily leaked to the third party other than the purchaser. As a result, "spoofing" can happen, wherein the third party purchases products as if the third party becomes the authenticated person.

On the other hand, the purchaser may conduct the internet shopping with a purchaser portable terminal provided with a communication function, including a cell phone. In this case, since data such as the personal identification information are stored in memories inside the purchaser portable terminal instead of being stored in a removable separate apparatus such as a hard disk, the "spoofing" is not likely to happen due to leakage of the personal identification information, comparing to the client computer such as PC. However, a problem exists in regard to difficulty of obtaining sufficient information, because, since the screen size of the purchaser portable terminal is generally small, the purchaser has to switch or scroll the screens in order to select or compare products so that extra efforts are required; communication speed is often slow as compared to PC and the like; it takes lot of time to download data such as images; and the communication charge is expensive; and from other reasons.

Therefore, what is needed is to use a client computer which can display multiple images on one screen for browsing products by the purchaser for the personal authentication and settlement authentication processing, because client computer provides a display screen having the size large enough to give detailed description of the products and a fast communication function to give sufficient information for deciding the purchase, although the personal identification information should not be stored in the place where the data can be leaked to the third party, such as hard disks of the client computer for preventing the "spoofing".

### DISCLOSURE OF THE INVENTION

An object of the present invention is to provide an environment for the purchaser to select products using a client computer, such as PC, with a large screen and better operability and for enabling a personal identification information requested at the time of the personal authentication and the settlement authentication be obtained from a purchaser portable terminal with less risk of leakage of information to a third party, instead of a client computer, to prevent "spoofing", while products are selected.

In order to achieve the above object, there is provided a communication intermediating program causing a client compute connectable to a server via a computer network to execute personal identification processing in cooperation with a portable terminal storing personal identification information therein, the personal identification processing having, in response to a personal identification information request signal from the server, transferring the personal identification information request signal to the portable terminal; and transferring to the server the personal identification information stored in the portable terminal, the personal identification information being sent to the client computer by the portable terminal in response to the personal identification information request signal.

According to the above invention, products are browsed and selected utilizing a client computer, such as PC, with better operability which large screen provides clear and detailed information; the personal authentication and the settlement authentication is executed with the personal identification information stored in the purchaser portable terminal which has less possibility of leakage of the personal identification information to the third party than a terminal apparatus such as PC; and, therefore, the "spoofing" can be prevented.

### BRIEF DESCRIPTION OF THE DRAWINGS

Fig. 1 shows a configuration example of an embodiment of the present invention;
Fig. 2 shows an example of a credibility check of electronically signed data;
Fig. 3 is a flowchart of a first embodiment;
Figs. 4 and 5 are flowcharts of a second embodiment; and
Figs. 6 to 9 are flowcharts of a third embodiment.

### BEST MODE FOR CARRYING OUT THE INVENTION

Embodiments of the present invention will now be described with reference to the drawings. It is however to be noted that the technical field of the present invention is not limited to those embodiments but covers the invention as defined in the appended claims and equivalents thereof.

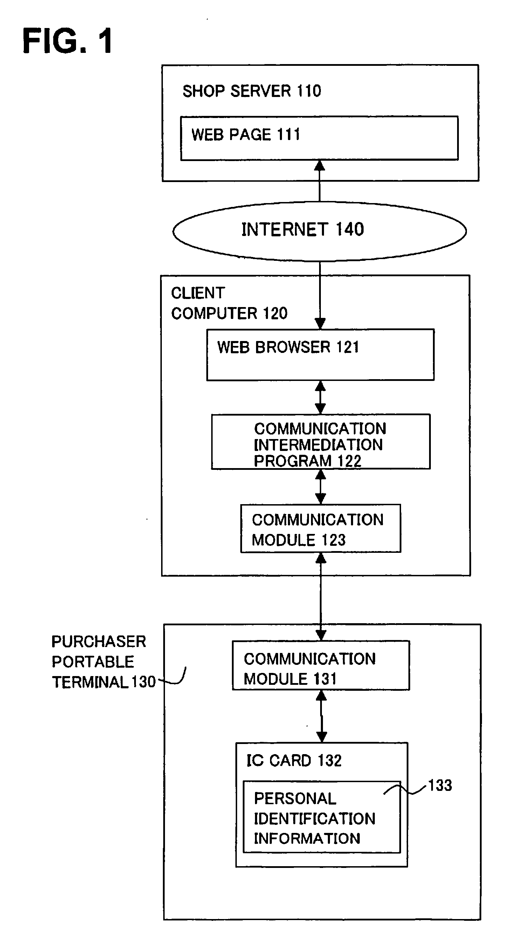

Fig. 1 shows a configuration example of an embodiment of the present invention.

A shop server 110 is a server providing a web page 111 of a shop. A client computer 120 is installed with a web browser 121 for browsing the web page and a communication intermediation program 122 of the present invention, and further provided with a communication module 123. The web browser 121 and the communication intermediation program 122 are implemented on the same operating system and the communication intermediation program 122 can be activated from the web browser 121.

The shop server 110 and the client computer 120 are connected via Internet 140.

A purchaser portable terminal 130 is provided with a communication module 131 which can communicate data with the communication module 123 in the client computer 120 and an IC card 132 containing personal identification information 133. As an example of the communicationmodule 123 and the communication module 131, Bluetooth or IEEE 802.11 wireless module is preferred.

The IC card 132 is a chip card with built-in IC chip and has a calculation function, a memory larger than a magnetic card and a high security function. The security function includes an encryption function for preventing eavesdropping of data by encrypting and decrypting data transactions with outside of the card with the calculation function and a function for preventing forges, falsifications, interpolations and the like, such that circuitry of the chip itself is destroyed when attempting to disassemble and analyze the IC card due to tamper-resistance (i.e., a property for resisting physical attacks from the outside and making analysis difficult). In this way, the personal identification information 133 is less likely to leak to the third party than PC, because of protecting not only the personal identification information 133 itself in the IC card 132, but also the transaction of the personal identification information 133 between the IC card 132 and an external apparatus.

The personal identification information 133 stores a CA•• electronically-signed purchaser portable terminal electronic certificate and a purchaser portable terminal private key as the personal information, and credit card information needed for credit card settlement as the settlement information. Also, for example, the personal identification information 133 may store an address, a name, an age, a telephone number and a blood type as the personal information, and a bank account number and the like as the settlement information.

The CA••electronically-signed purchaser portable terminal electronic certificate is an electronic certificate issued to the purchaser portable terminal by CA (CertificationAuthority), with a CA electronic signature added. The purchaser portable terminal electronic certificate includes a purchaser portable terminal public key, and CA assures that the purchaser portable terminal public key certainly is a possession of the purchaser portable terminal itself.

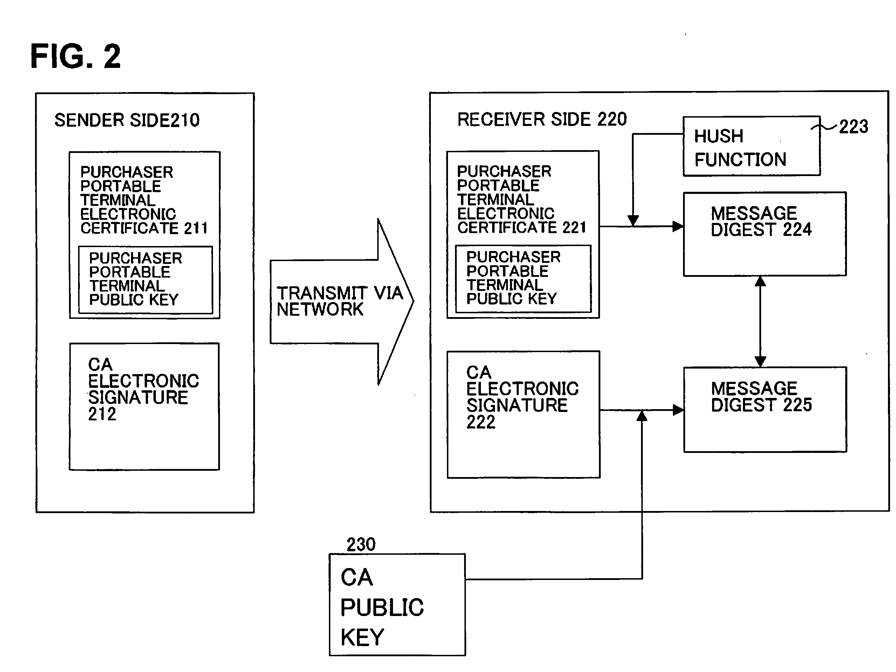

The electronic signature utilizes a public key infrastructure, and is generated by converting base data to a message digest following a certain algorithm (hush function) and by encrypting the message digest with the private key of the signer, and is utilized as a pair with the base data. Fig. 2 shows how to be able to check the credibility of the electronically signed data via network.

Fig. 2 shows an example of a credibility check of electronically signed data. This example is the case that the CA••electronically-signed purchaser portable terminal electronic certificate is received. The receiver side 220 compares a message digest 225 obtained by decrypting a CA electronic signature 222 with a CA public key 230 with a message digest 224 obtained by converting a purchaser portable terminal electronic certificate 221 with a hush function 223. If the results are the same, it is known that data is not interpolated in the middle of transmission and that the CA electronic signature 222 certainly has been added to the purchaser portable terminal electroniccertificate221. Since existence of the CA is credible, credibility is established for the received purchaser portable terminal electronic certificate 221. The base data is not limited to the electronic certificate and the signer is not limited to CA, and in those cases, the purchaser portable terminal electronic certificate, the CA electronic signature and CA public key may be read differently as corresponding data, an electronic signature of a corresponding signer and a public key of a corresponding signer, respectively. Since the credibility check of an electronically signed document is often performed in the specification, the check procedure is hereinafter referred to as an "electronic signature check".

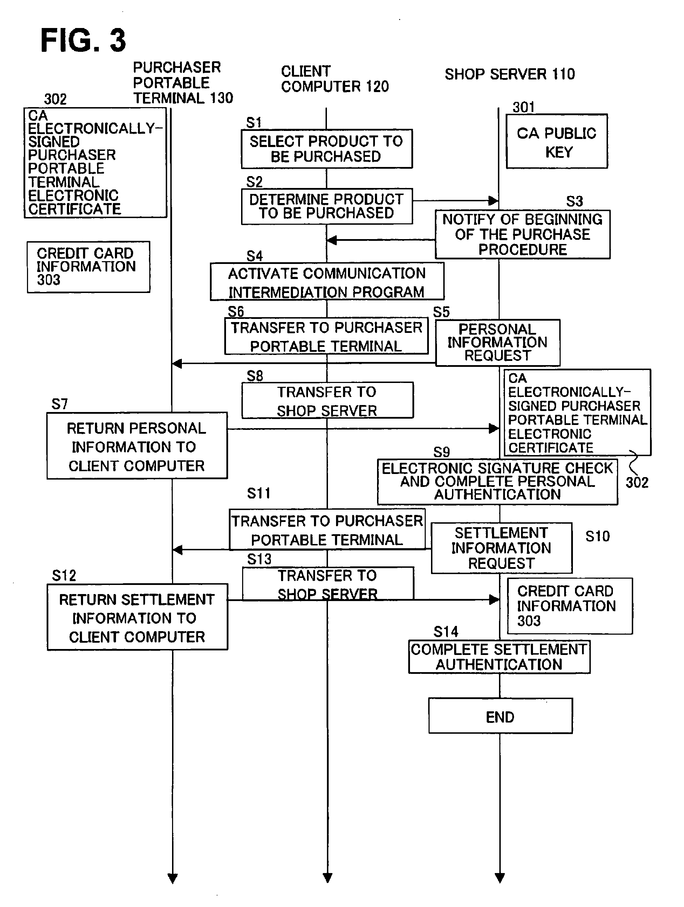

Fig. 3 is a flowchart of a first embodiment. The first embodiment is an example wherein, in the Internet shopping including the personal authentication executed by means of the purchaser portable terminal electronic certificate and the settlement authentication executed by means of the credit card information, a communication intermediation program transfers a personal information request from the shop server to the purchaser portable terminal, transfers the CA•• electronically-signed purchaser portable terminal electronic certificate returned from the purchaser portable terminal to the shop server, transfers a settlement information request from the shop server to the purchaser portable terminal and transfers the credit card information returned from the purchaser portable terminal to the shop server for executing authentication processing respectively.

On the assumption of the embodiment, the shop server has already obtained a CA electronic key 301. Also, the IC card in the purchaser portable terminal 130 has already stored the CA•• electronically-signed purchaser portable terminal electronic certificate 3 02 and the credit card information 3 03 as the personal identification information.

First, the purchaser accesses to the shop server 110 via the Internet, browses seller's web page 111 stored in the shop server 110 and selects products, using a web browser 121 of the client computer 120 with a large screen which facilitates obtaining information and with good operability (S1). When deciding a product to be purchased, the purchaser sends order information and purchase intention to the shop server (S2). For example, step S2 is achieved by clicking a button provided on the web page for moving to a purchase procedure when the product is selected in advance, and by the click the purchaser is judged to have purchase intention for the product selected by then. The order information includes information about the product to be purchased and the number of the product.

The shop server 110 notifies the client computer 120 of beginning of the purchase procedure (S3). In step S3, for example, a page is transmitted with special embedded HTML tags indicating the beginning of the purchase. In response to the notification of the beginning of the purchase procedure, the communication intermediation program is activated and starts transfer (S4). In step S4, for example, the communication intermediation program 122 may be activated when the web browser 121 detects the special HTML tags indicating the beginning of the purchase. Then, the shop server 110 sends a personal information request to the client computer 120 in order to execute a personal authentication (S5). The communication intermediation program 122 transfers the personal information request to the purchaser portable terminal 130 via a communication module 123 (S6). Responding to the personal information request, the purchaser portable terminal 130 returns the CA••electronically-signed purchaser portable terminal electronic certificate 302 from the IC card 132 storing the personal identification information 133, and the CA•• electronically-signed purchaser portable terminal electronic certificate 302 are sent to the client computer 120 via a communication module 131 (S7). The communication intermediation program 122 transfers the CA•• electronically-signed purchaser portable terminal electronic certificate to the shop server 110 without storing the CA•• electronically-signed purchaser portable terminal electronic certificate 302 into a hard disk of the client computer (S8). The shop server 110 uses a CApublic key 301 to perform an electronic signature check of the CA••electronically-signed purchaser portable terminal electronic certificate 302 (S9). A procedure of the electronic signature check is given in Fig. 2. The personal authentication is terminated when credibility of the purchaser portable terminal electronic certificate is established in step S9.

When the personal authentication succeeds in step S9, then, the shop server 110 requests the settlement information to the client computer 120 (S10). The communication intermediation program 122 transfers the settlement information request to the purchaser portable terminal 130 (S11). Responding to the settlement information request, the IC card 132 in the purchaser portable terminal 130 returns credit card information 303, and the credit card information 303 are sent to the client computer 120 via the communication module 131 (S12). The communication intermediation program 122 transfers the credit card information to the shop server without storing the credit card information 303 into a hard disk of the client computer (S13). The shop server conducts a credit examinationbased on the credit card information 303 and terminates the settlement authentication (S14). Subsequently, although not shown, the first embodiment is terminated through a sipping transaction of the product due to the settlement authentication result.

The returned credit card information 303 of step S12 is desired to be encrypted in order not to be intercepted by the third party other than the shop server. For example, if the purchaser portable terminal 130 has obtained a shop server public key, the information may be encrypted by means of the shop server public key. Although the embodiment is an example that the personal authentication and the settlement authentication are executed separately, the personal authentication and the settlement authentication may be executed at the same time. In this case, in step S7, the IC card 132 in the purchaser portable terminal 130 may return the CA••electronically-signed purchaser portable terminal electronic certificate 302 and the credit card information 303 simultaneously.

According to the embodiment, while using the client computer with a large screen for selecting the product, the personal authentication and the settlement authentication can be completed using the personal identification information which is stored in the IC card in the purchaser portable terminal and is less likely to be leaked to the third party. Therefore, the Internet shopping can be conducted without leaving the personal identification information on the hard disk of the client computer and, at the same time, the spoofing can be prevented which is due to an environment for readout of the personal identification information from the hard disk in spite of facilitating the internet shopping.

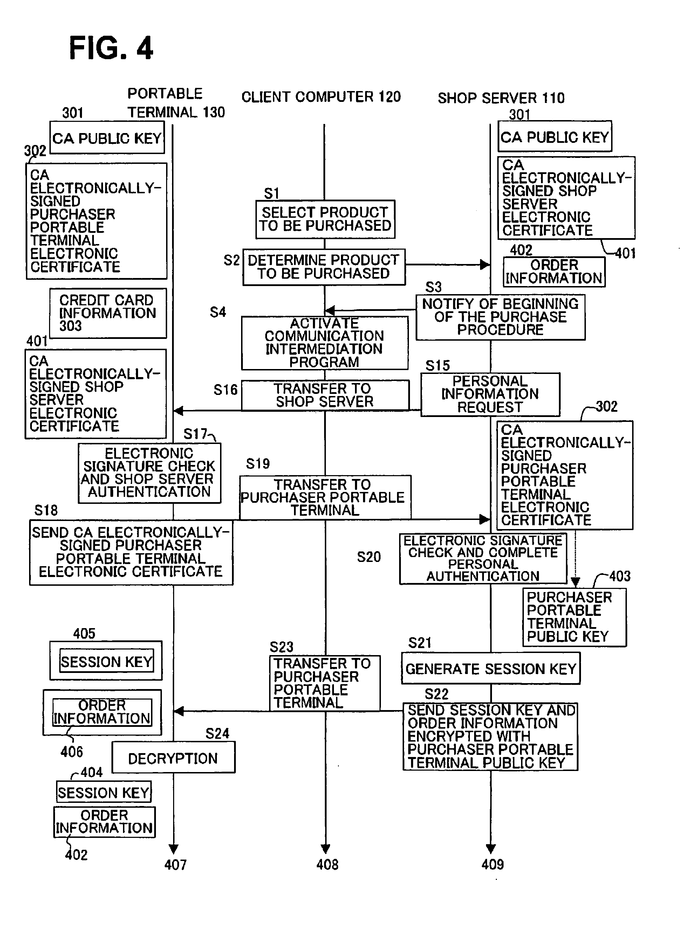

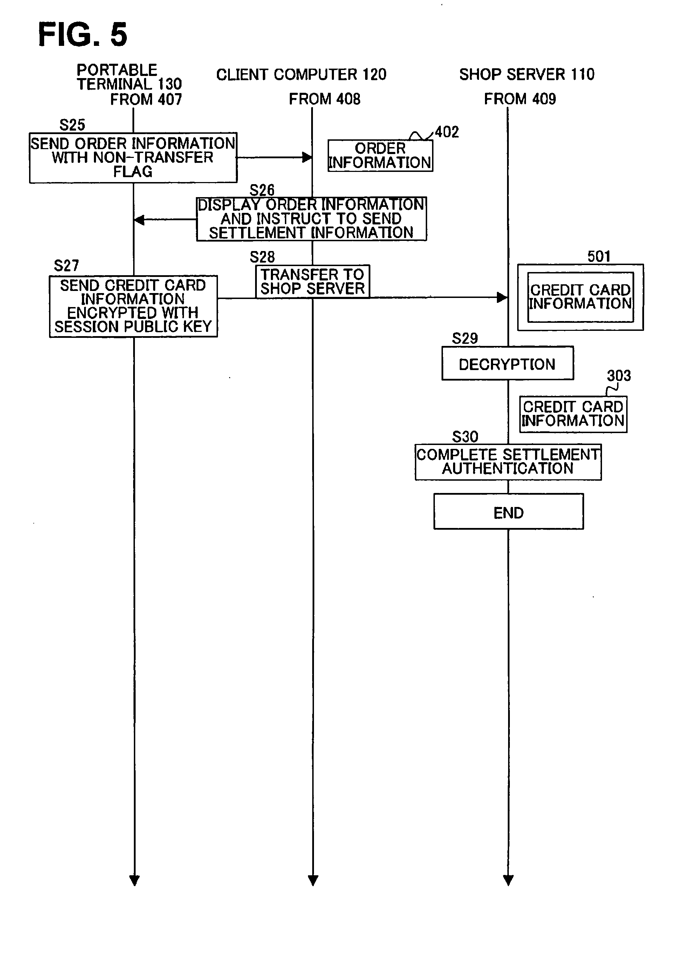

Figs. 4 and 5 are flowcharts of a second embodiment. In Fig. 4, lower ends of flows 407, 408, 409 respectively for the portable terminal 130, the client computer 120 and the shop server 110 continue to upper ends of corresponding flows of Fig. 5, and therefore, the description is conducted by combining the two figures together. The second embodiment is an example wherein, in the Internet shopping including the personal authentication executed by means of the purchaser portable terminal electronic certificate and the settlement authentication executed by means of the credit card information, the communication intermediation program transfers the personal information request from the shop server to the purchaser portable terminal, transfers the CA-signed purchaser signature returned from the purchaser portable terminal to the shop server, transfers the settlement information request from the shop server to the purchaser portable terminal and transfers to the shop server the settlement information, encrypted based on common key cryptography and returned from the purchaser portable terminal for executing authentication processing respectively.

On the assumption of the embodiment, the IC card in the purchaser portable terminal 130 has already obtained the CA•• electronically-signed purchaser portable terminal electronic certificate 302 and the credit card information 303 as the personal identification information, and the shop server 110 has already obtained a CA••electronically-signed shop server electronic certificate 401. The purchaser portable terminal and the shop server have already obtained the CA public key 301.

In Fig. 4, first, the purchaser accesses to the shop server 110 via the Internet, browses seller's web page 111 stored in the shop server 110 and selects products, using a web browser 121 of the client computer 120 with a large screen which facilitates obtaining information and with good operability (S1). When deciding a product to be purchased, the purchaser sends order information 402 and purchase intention to the shop server (S2) . For example, step S2 is achieved by clicking a button provided on the web page for moving to a purchase procedure and by the click the purchaser is judged to have purchase intention for the product selected by then. The order information 402 is information about the product to be purchased and the number of the product.

The shop server 110 notifies the client computer 120 of beginning of the purchase procedure (S3). In step S3, for example, a page is transmitted with special embedded HTML tags indicating the beginning of the purchase. In response to the notification of the beginning of the purchase procedure, the communication intermediation program is activated and starts transfer (S4). In step S4, for example, the communication intermediation program 122 may be activated when the web browser 121 detects the special HTML tags indicating the beginning of the purchase.

The shop server 110 sends the personal information request and the CA••electronically-signed shop server electronic certificate 401 to the client computer 120 (S15). The communication intermediation program 122 transfers the personal information request and the CA••electronically-signed shop server electronic certificate 401 to the purchaser portable terminal 130 (S16). The IC card 132 in the purchaser portable terminal 130 uses the CA public key 301 to perform an electronic signature check of the CA••electronically-signed shop server electronic certificate 401 (S17). The shop server authentication is terminated when credibility of the shop server electronic certificate is established in step S17.

After the shop server authentication of step S17, in response to the personal information request, the IC card 132 in the purchaser portable terminal 130 returns the CA•• electronically-signed purchaser portable terminal electronic certificate 302, and the CA••electronically-signed purchaser portable terminal electronic certificate is sent to the client computer 120 (S18). The communication intermediation program 122 transfers the CA••electronically-signed purchaser portable terminal electronic certificate to the shop server 110 without storing the CA••electronically-signed purchaser portable terminal electronic certificate 302 into the hard disk of the client computer 120 (S19). The shop server 110 performs an electronic signature check of the CA••electronically-signed purchaser portable terminal electronic certificate 302 (S20). The personal authentication is terminated when credibility of the purchaser portable terminal electronic certificate is established in step S20. Since the credibility of the purchaser portable terminal electronic certificate is established in step S20, a purchaser portable terminal public key 403 is stored, which is included in the purchaser portable terminal electronic certificate, for later use.

Then the shop server 110 generates a session key which is equivalent to a common key for encrypting subsequent communication with the common key cryptography (S21). The shop server 110 encrypts the session key 404 and the order information 402 using the purchaser portable terminal public key 403 and sends an encrypted session key 405 and encrypted order information 406 to the client computer (S22). By encryption using the purchaser portable terminal public key 403, the session key 404 and the order information 402 can not be read out unless one has a purchaser portable terminal private key, that is effectively, can only be decrypted by the purchaser portable terminal. The communication intermediation program 122 transfers the encrypted session key 405 and the encrypted order information 406 to the purchaser portable terminal (S23). The IC card in the purchaser portable terminal 130 decrypts the encrypted session key 405 and the encrypted order information 406 using the purchaser portable terminal private key to pick up the session key 404 and the order information (S24).

Reference is hereinafter made to Fig. 5. Subsequently, The IC card••132 in the purchaser portable terminal 130 returns the order information 402 with a no-transfer flag in order to make the purchaser confirm the purchasing product on the client computer, and the order information is sent to the client computer 120 via the communication module 131 (S25). The no-transfer flag is used when it is not desirable for the intermediate program to transfer data. For example, the no-transfer flag is achieved by sending a page embedded with special HTML tags indicating the no-transfer flag. The communication intermediate program 122 detects theno-transferflag, makes the web browser 121 display the order information 402 for making the purchaser conduct a final confirmation of the order information and, when receiving the result of the final confirmation, sends a settlement information request to the purchaser portable terminal unless the purchase is cancelled (S26).

In response to the settlement information request, the IC card••132 in the purchaser portable terminal 130 returns encrypted credit card information 501 which is credit card information 303 encrypted by the session key 404 and the encrypted credit card information 501 is sent to the client computer (S27). The communication intermediate program 122 transfers the encrypted credit card information to the shop server 110 without storing the encrypted credit card information 501 into the hard disk of the client computer 120 (S28). In the shop server 110, the encrypted credit card information is decrypted and the credit card information 303 is picked up (S29). Then, the settlement authentication is completed with the credit examination of the credit card (S30). Subsequently, although not shown, the second embodiment is terminated through a sipping transaction of the product due to the settlement authentication result.

According to the embodiment, while using the client computer with a large screen for selecting the product, the personal authentication and the settlement authentication can be completed using the personal identification information which is stored in the IC card in the purchaser portable terminal and is less likely to be leaked to the third party. Encryption of the communication between the shop server and the purchaser portable terminal is done. No the personal identification information is left on the hard disk of the client computer. Therefore, while maintaining an environment for facilitating the internet shopping, not only the spoofing can be prevented which is caused by readout of the personal identification information from the hard disk of the client computer, but also the spoofing can be prevented which is caused by eavesdropping of the communication among the purchaser portable terminal, the client computer and the shop server.

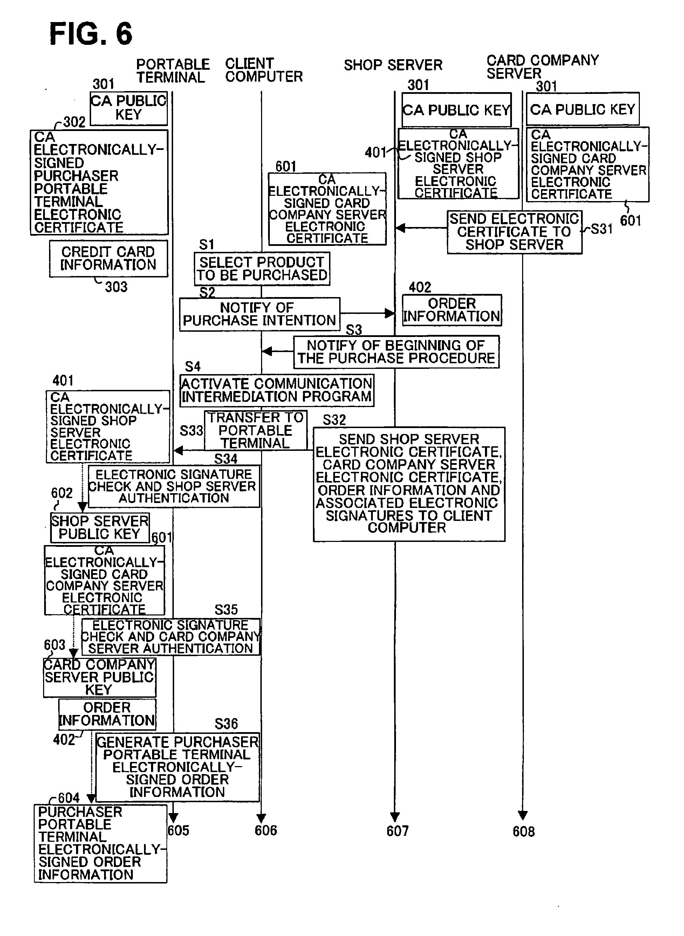

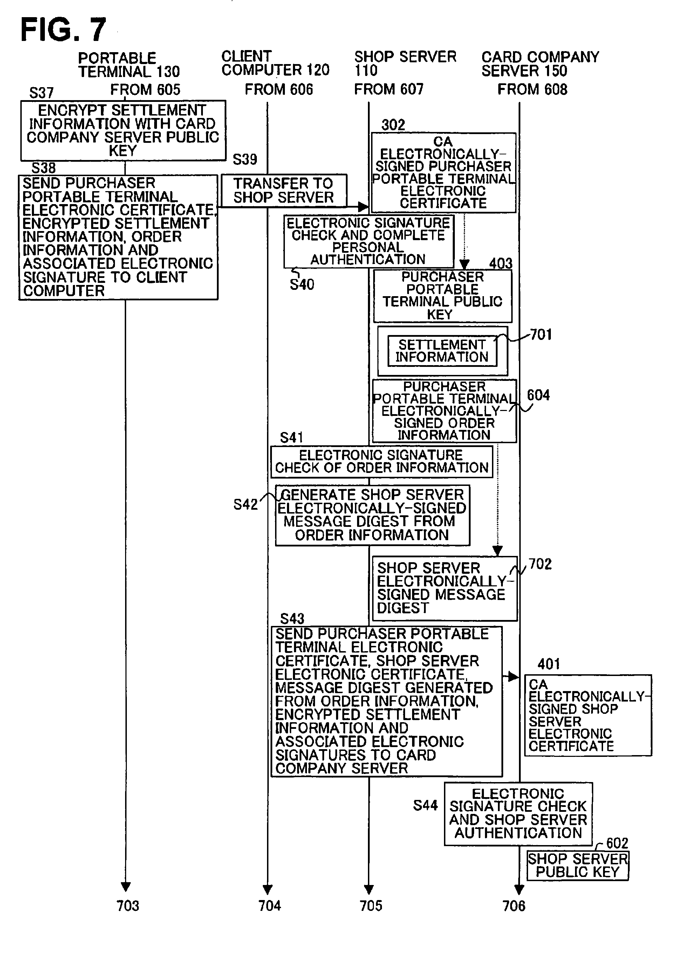

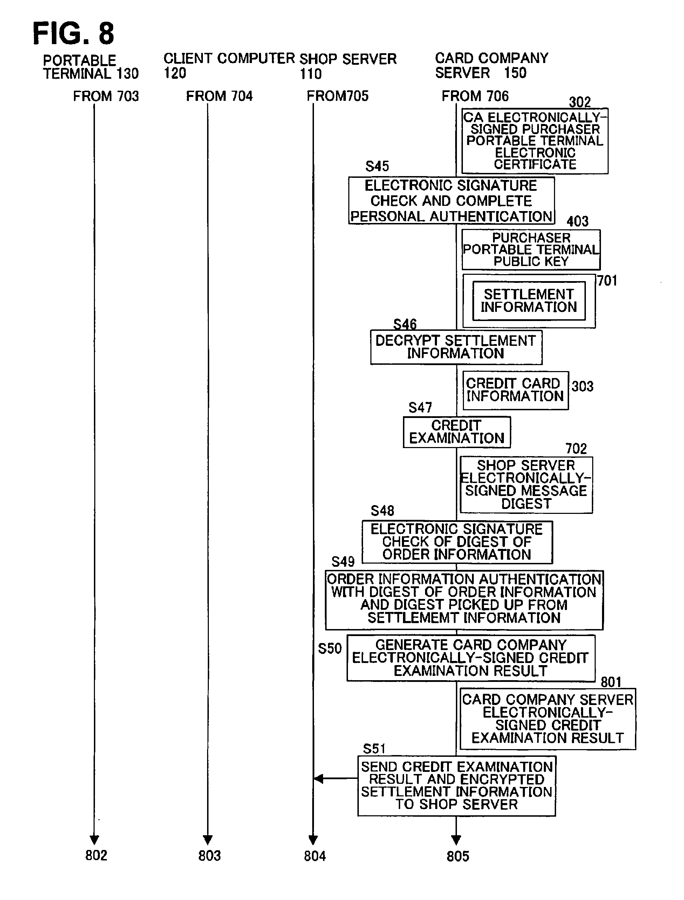

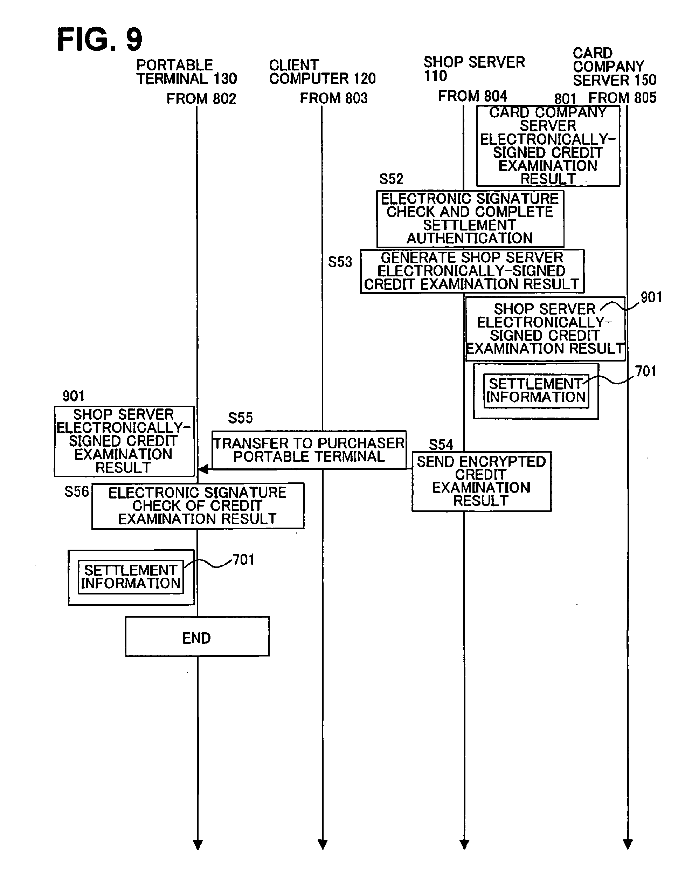

Figs. 6, 7, 8 and 9 are flowcharts of a third embodiment. As is the case with the relationship between Figs. 4 and 5, lower ends of flows of Fig. 6, lower ends of flows of Fig. 7 and lower ends of flows of Fig. 8 continue to upper ends of flows of Fig. 7, upper end of flows of Fig. 8 and upper end of flows of Fig. 9, respectively, and therefore, the description is conducted by combining the four figures together. The third embodiment is an example that the present invention is applied to a mechanism called SET (Secure Electronic Transaction), which is developed as a standard specification of existing credit card settlement. The third embodiment shows an example that, in the Internet shopping, the personal authentication is executed by means of the purchaser portable terminal electronic certificate and the settlement authentication is executed by means of the credit card information. For executing authentication processing respectively the communication intermediation program transfers the personal information request from the shop server to the purchaser portable terminal, transfers the CA•• electronically-signed purchaser signature returned from the purchaser portable terminal to the shop server, transfers the settlement information request from the shop server to the purchaser portable terminal and transfers to the shop server the data including credit card information encrypted based on a card company server public key and returned from the purchaser portable terminal.

On the assumption of the embodiment, the purchaser portable terminal 130 can process a function of software called Wallet, which is generally executed by PC of the purchaser in SET. Also, the purchaser portable terminal 130 has already obtained the CA••electronically-signed purchaser portable terminal electronic certificate 302; the shop server 110 has already obtained a CA••electronically-signed shop server electronic certificate 401; and the card company server 150 has already obtained a CA••electronically-signed card company server electronic certificate 601. Further, the purchaser portable terminal 130, the shop server 110 and the card company server 150 have already obtained the CA public key 301.

The card company server sends CA••electronically-signed card company server electronic certificate 401 to the shop server in advance (S31).

In Fig. 6, first, the purchaser accesses to the shop server 110 via the Internet, browses seller's web page 111 stored in the shop server 110 and selects products, using a web browser 121 of the client computer 120 with a large screenwhich facilitates obtaining information and with good operability (S1). When deciding a product to be purchased, the purchaser sends order information 402 and purchase intention to the shop server (S2). For example, step S2 is achieved by clicking a button provided on the web page for moving to a purchase procedure and by the click the purchaser is judged to have purchase intention for the product selected by then. The order information 402 is information about the product to be purchased and the number of the product.

The shop server 110 notifies the client computer 120 of beginning of the purchase procedure (S3). In step S3, for example, a page is transmitted with special embedded HTML tags indicating the beginning of the purchase. In response to the notification of the beginning of the purchase procedure, the communication intermediation program is activated and starts transfer (S4).

The shop server 110 sends to the client computer 120 the CA••electronically-signed card company server electronic certificate 601, the CA••electronically-signed shop server electronic certificate 401 and the order information 402 (S32). The communication intermediation program 122 transfers to the purchaser portable terminal 130 the CA••electronically-signed card company server electronic certificate 601, the CA•• electronically-signed shop server electronic certificate 401 and the order information 402 (S33).

The IC card 132 in the purchaser portable terminal 130 uses the CA public key 301 to perform the electronic signature check of the CA••electronically-signed shop server electronic certificate 401 and executes a shop server authentication (S34). If the authentication succeeds, a shop server public key 602 is stored, which is included in the shop server electronic certificate. Subsequently, Using the CA public key, the electronic signature check is performed also for the CA•• electronically-signed card company server electronic certificate 601 to execute a card company server authentication (S35). If the authentication succeeds, a card company server public key 603 is stored, which is included in the card company server electronic certificate. Then, the IC card 132 in the purchaser portable terminal 130 generates a purchaser portable terminal electronic signature using the order information 402 as base data to form purchaser portable terminal electronically-signed order information 604 (S36). The purchaser portable terminal electronic signature ensures that the order has been issued by the purchaser and, therefore, the purchaser can not explain away.

Reference is hereinafter made to Fig. 7. Also, the IC card 132 in the purchaser portable terminal 130 summarizes the credit card information 303 and a message digest generated from the order information 402 as the settlement information and generates encrypted settlement information 701 by encrypting with the card company public key 603 (S37). Consequently, the credit card information can only be decrypted by a private key of the credit card company and will not be underlooked by the shop. In this way, the CA••electronically-signed purchaser portable terminal electronic certificate 302, the purchaser portable terminal electronically-signed order information 604 and the encrypted settlement information 701 are sent to the client computer 120 (S38). The communication intermediate program 122 transfers to the shop server the CA••electronically-signed purchaser portable terminal electronic certificate 302, the purchaser••portable terminal••electronically-signed order information 604 and the encrypted settlement information 701 encrypted with the credit card company server public key (S39). The shop server 110 performs the electronic signature check of the CA•• electronically-signed purchaser portable terminal electronic certificate 302 and executes the personal authentication (S40). If the authentication succeeds, the purchaser portable terminal public key 403 is stored. Then, the electronic signature check is performed for the purchaser••portable terminal•• electronically-signed order information 604 (S41). If results of comparison are the same, the order information is credible and the shop can find out the name, the number and the like of a product tobe offered to the purchaser. As proof of the agreement of the order between the purchaser and the shop, the shop server generates a shop server electronic signature using a message digest generated from the order information 402 as base data and generates a shop server electronically-signed message digest 702 (S42). Then, the shop server 110 sends to the card company server 150 the CA••electronically-signed purchaser portable terminal electronic certificate 302, the CA•• electronically-signed shop server electronic certificate 401, the shop server electronically-signed message digest 702 and the settlement information 701••encrypted with the card company server public key 603 (S43). By sending the message digest, rather than the order information, details of the order will not be transmitted to the card company, and the card company will only know total amount and the fact that the agreement has been reached between the purchaser and the shop for the order.

The card company server 150 performs the electronic signature check of the CA••electronically-signed shop server electronic certificate 401 and executes a shop server authentication (S44). If the authentication succeeds, the shop server public key 602 is stored, which is included in the shop server electronic certificate.

Fig. 8 is used from here. Subsequently, the card company server 150 performs the electronic signature check of the CA•• electronically-signed purchaser portable terminal electronic certificate 302 and executes a personal authentication (S45). If the authentication succeeds, the purchaser portable terminal public key 403 is stored, which is included in the purchaser portable terminal electronic certificate. Then, the encrypted settlement information 701 is decrypted using the card company server private key (S46). The credit information is picked up from the settlement information and a settlement authentication is executed by performing the credit examination (S47). Further, the electronic signature check is performed for the shop server electronically-signed message digest 702 to confirm that the agreement has been reached between the purchaser and the shop for the order (S48). Although the card company server 150 can not comprehend the direct order information 402, the card company server 150 can confirm that the seller has checked the details of the order information 402 from the purchaser in step S42. Then, a sent message digest 702 is compared to a message digest which has been generated from the order information 402 and which is obtained when the settlement information 304 is decrypted (S49). The comparison is performed in order to confirm whether the settlement amount is based on the order information 402. If results of the comparison are the same, it is confirmed that the amount charged by the shop certainly is based on the order information 402 of the purchaser. In order to notify the shop of a result of the examination, a card company server electronically-signed examination result 801 is generated (S50). The card company server 150 send to the shop server the card company server electronically-signed examination result 801 and the settlement information 701 encrypted with the card company server public key 603 (S51).

Fig. 9 is used from here. The shop server 110 performs the electronic signature check of the card company server electronically-signed examination result 801 and completes the settlement authentication with the examination result (S52). In order to notify the purchaser, a shop server electronic signature is generated using the examination result as base data, and a shop server electronically-signed examination result 901 is generated (S53). The shop server electronically-signed examination result 901 and the settlement information 701 encrypted with the card company server public key 603 are sent to the client computer 120.

The communication intermediation program 122 transfers the shop server electronically-signed examination result 901 and the encrypted settlement information 701 to the purchaser portable terminal 130 (S55).

The IC card 132 in the purchaser portable terminal 130 performs the electronic signature check of the shop server electronically-signed examination result 901, and after the credibility is confirmed, the examination results is checked (S56). At this point, the purchaser portable terminal notifies the client computer of completion of entire processing and, for example, the notification may be displayed by the browser. In this way, the third embodiment is terminated.

According to the embodiment, while using the client computer with a large screen for selecting the product, the personal authentication and the settlement authentication can be completed using the personal identification information which is stored in the IC card in the purchaser portable terminal and which is less likely to be leaked to the third party, and also directly utilizing the existing mechanism of SET. Therefore, while maintaining an environment for facilitating the internet shopping, not only the spoofing can be prevented which is caused by readout of the personal identification information from the hard disk of the client computer, but also the spoofing can be prevented which is caused by eavesdropping of the communication among the purchaser portable terminal, the client computer, the shop server and the card company server, and further, if equipment for SET have been installed, the equipment can be directly utilized, resulting in a benefit that the past equipment investment does not hove to be wasted.

Above described embodiments of the present invention are not limited to the authentication processing associated with the purchase transaction conducted by the shop server and can be applied to the authenticationprocessing associated with other transactions.

### INDUSTRIAL APPLICABILITY

As described above, according to the present invention, in the Internet shopping, while using the client computer with a large screen for selecting the product, an environment can be provided for a personal authentication and a settlement authentication without storing personal identification information of the purchaser into a hard disk of the client computer which the possibility that data can be read out by a third party, so that the spoofing can be prevented.• • Further, by using an encryption function included in an IC card in a purchaser portable terminal, communication data can be protected between a server and the purchaser portable terminal, so that the spoofing can be prevented, which is due to eavesdropping of the personal identification information.

## Claims

1. A program causing a client compute connectable to a server via a computer network to execute personal identification processing in cooperation with a portable terminal storing personal identification information therein, the personal identification processing comprising:
in response to a personal identification information request signal from the server, transferring the personal identification information request signal to the portable terminal; and
transferring to the server the personal identification information stored in the portable terminal, the personal identification information being sent to the client computer by the portable terminal in response to the personal identification information request signal.

2. The program according to claim 1, wherein
the personal identification processing further comprises:
when received data contains a non-transfer flag, not transferring the received data.

3. The program according to claim 1, wherein
the program causes the client computer to execute, prior to the personal identification processing, starting up in response to a start-up instruction corresponding to an instruction from a shop server during a session of an electronic commerce in which a browser installed in the client computer connected to the server is used.

4. The program according to claim 1, wherein
the personal identification information includes at least one of personal information identifying an individual who conducts the electronic commerce and settlement information of the individual who conducts the electronic commerce.

5. The program according to claim 3, wherein
the personal information includes a personal electronic certificate of the portable terminal and an electronic signature of a certification authority on the personal electronic certificate.

6. The program according to claim 3, wherein
the settlement information includes either a credit card ID or a charge account ID of a financial institution.

7. The program according to claim 1, wherein
the personal identification information sent to the client computer by the portable terminal in response to the personal identification information request signal is encrypted in compliance with a predetermined encryption key.

8. The program according to claim 7, wherein
the predetermined encryption key is either a public key of the server or a credit card company or a session key generated during the electronic commerce session.

9. A client computer connectable via a computer network to a server which executes••personal identification processsing in cooperation with a portable terminal storing personal identification information therein, comprising:
transfer unit which, in response to a personal identification information request signal from the server, transfers the personal identification information request signal to the portable terminal; and
transfer unit which transfers to the server the personal identification information stored in the portable terminal, the personal identification information being sent to the client computer by the portable terminal in response to the personal identification information request signal.
